(19) Europäisches Patentamt
European Patent Office
Office européen des brevets

(11) **EP 3 899 638 B1**

(12) **EUROPEAN PATENT SPECIFICATION**

(45) Date of publication and mention
of the grant of the patent:
**15.05.2024 Bulletin 2024/20**

(21) Application number: **18944009.2**

(22) Date of filing: **20.12.2018**

(51) International Patent Classification (IPC):
*G02B 5/18* (2006.01)          *G02B 30/33* (2020.01)
*H04N 13/32* (2018.01)        *H04N 13/351* (2018.01)
*F21V 8/00* (2006.01)

(52) Cooperative Patent Classification (CPC):
**G02B 5/1819; G02B 30/33; H04N 13/32;**
**H04N 13/351;** G02B 6/0018; G02B 6/002;
G02B 6/0036

(86) International application number:
**PCT/US2018/066968**

(87) International publication number:
**WO 2020/131090 (25.06.2020 Gazette 2020/26)**

(54) **STATIC MULTIVIEW DISPLAY AND METHOD HAVING MULTIVIEW ZONES**

STATISCHE MEHRANSICHTSANZEIGE UND VERFAHREN MIT MEHREREN SICHTZONEN

AFFICHAGE MULTI-VUES STATIQUE ET PROCÉDÉ AYANT DES ZONES MULTI-VUES

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**27.10.2021 Bulletin 2021/43**

(73) Proprietor: **LEIA Inc.**
**Menlo Park, CA 94025 (US)**

(72) Inventor: **FATTAL, David A.**
**Menlo Park, California 94025 (US)**

(74) Representative: **Carpmaels & Ransford LLP**
**One Southampton Row**
**London WC1B 5HA (GB)**

(56) References cited:
CA-A1- 3 055 529          US-A1- 2017 363 794
US-A1- 2018 196 194

**Description**

BACKGROUND

Electronic displays are a nearly ubiquitous medium for communicating information to users of a wide variety of devices and products. Generally, electronic displays may be categorized as either active displays (i.e., displays that emit light) or passive displays (i.e., displays that modulate light provided by another source). Passive displays, while often exhibiting attractive performance characteristics including, but not limited to, inherently low power consumption, may find somewhat limited use in many practical applications given the lack of an ability to emit light. In order to overcome the limitations of passive displays associated with emitted light, many passive displays are coupled to an external light source, such as a backlight.

US 2017/363794 A1 relates to a multi-view pixel directional backlight module and a naked-eye 3D display device. The multi-view pixel directional backlight module includes at least two rectangular light guide plates closely stacked together. A light-emerging surface of the rectangular light guide plate is provided with multiple pixel arrays. Light emitted by pixels in a same pixel array is pointed to a same viewing angle, and different pixel arrays have different viewing angles.

US 2018/196194 A1 relates to multiview displays that include a backlight and a screen used to form a plurality of multiview pixels. Each multiview pixel includes a plurality of sets of light valves. The backlight includes a light source optically coupled to a plate light guide configured with a plurality of multibeam elements. Each multibeam element corresponds to a set of light valves and is spatially offset with respect to a center of the set of light valves toward a center of the multiview pixel.

CA 3055529 A1 relates to a multilayer static multiview display and method of multilayer multiview display operation that provide a plurality of multiview images using diffractive scattering of light from guided light beams having different radial directions. The static multiview display includes a first multiview display layer configured to emit directional light beams representing a first multiview image by diffractive scattering light from a radial pattern of guided light beams within the first multiview display layer.

BRIEF DESCRIPTION OF THE DRAWINGS

Various features of examples and embodiments in accordance with the principles described herein may be more readily understood with reference to the following detailed description taken in conjunction with the accompanying drawings, where like reference numerals designate like structural elements, and in which:

Figure 1A illustrates a perspective view of a multiview display in an example, according to an embodiment consistent with the principles described herein.
Figure 1B illustrates a graphical representation of angular components of a light beam having a particular principal angular direction corresponding to a view direction of a multiview display in an example, according to an embodiment consistent with the principles described herein.
Figure 2 illustrates a cross-sectional view of a diffraction grating in an example, according to an embodiment consistent with the principles described herein.
Figure 3A illustrates a cross-sectional view of a multiple view-zone multiview display in an example, according to an embodiment consistent with the principles described herein.
Figure 3B illustrates a top view of a multiple view-zone multiview display in an example, according to an embodiment consistent with the principles described herein.
Figure 3C illustrates a perspective view of a multiple view-zone multiview display in an example, according to an embodiment consistent with the principles described herein.
Figure 4A illustrates a top view of a diffraction grating in a multiple view-zone multiview display in an example, according to an embodiment consistent with the principles described herein.
Figure 4B illustrates a top view of a diffraction grating in a multiple view-zone multiview display in an example, according to an embodiment consistent with the principles described herein.
Figure 5A illustrates a cross-sectional view of a transmissive mode diffraction grating coupler in an example, according to an embodiment consistent with the principles described herein.
Figure 5B illustrates a cross-sectional view of a reflective mode diffraction grating coupler in an example, according to an embodiment consistent with the principles described herein.
Figure 5C illustrates a perspective view of a reflective mode diffraction grating coupler in an example, according to an embodiment consistent with the principles described herein.
Figure 6A illustrates a cross-sectional view of a parabolic reflector coupler in an example, according to an embodiment consistent with the principles described herein.

Figure 6B illustrates a perspective view of a parabolic reflector coupler in an example, according to an embodiment consistent with the principles described herein.

Figure 7 illustrates a block diagram of a multiple view-zone multiview display in an example, according to an embodiment consistent with the principles described herein.

Figure 8 illustrates a flow chart of a method of multiple view-zone multiview display operation in an example, according to an embodiment consistent with the principles described herein.

Certain examples and embodiments have other features that are one of in addition to and in lieu of the features illustrated in the above-referenced figures. These and other features are detailed below with reference to the above-referenced figures.

DETAILED DESCRIPTION

The invention is defined in the independent claims. Embodiments of the invention are defined in the dependent claims. Examples and embodiments in accordance with the principles described herein provide a multiple view-zone multiview display that emits directional light beams representing multiview images or three-dimensional (3D) images. In particular, embodiments consistent with the principles described herein provide a multiple view-zone multiview display having a light guide that guides light from a light source. The light source may include an optical emitter offset in a longitudinal direction. The optical emitter of the light source provides within the light guide a collimated guided light beam having a propagation angle determined by the longitudinal offset of the optical emitter. Moreover, different sets of diffraction gratings scatter or diffract out different portions of the collimated guided light beam as different pluralities of directional light beams representing the multiview images into different view zones. These view zones have different, non-overlapping angular ranges, which may be separated by a blank zone. Further, a direction of a multiview image is a function of both a color and the propagation angle of the collimated guided light beam. Note that the multiview images may be different from each other.

A grating characteristic of each of the diffraction gratings in a set of diffraction gratings determines the intensity and the principal angular direction of the directional light beam that corresponds to an intensity and a view direction of a view pixel of a corresponding multiview image in a view zone. The grating characteristic may include a grating pitch or feature spacing of the diffraction grating, a grating orientation of the diffraction grating or both, which determine the principal angular direction of the directional light beam provided by the diffraction grating. Furthermore, the grating characteristic may include a grating depth, a grating size (such as a length or width) or both that determines the intensity of the directional light beam provided by the diffraction grating. Moreover, the diffraction gratings in the set of diffraction gratings may be located on a same surface as an emission surface of the light guide through which a portion of the collimated guided light beam is scattered out as a plurality of directional light beams. Alternatively, the diffraction gratings in the set of diffraction gratings may be located on a surface of the light guide opposite to the emission surface of the light guide. Therefore, the light guide and the sets of diffraction gratings are transparent to light propagating in a vertical direction orthogonal the longitudinal direction. Furthermore, the multiple view-zone multiview display may include a collimating light coupler at input of the light guide. The collimating light coupler optically couples light from the optical emitter of the light source into the light guide input as the collimated guided light beams, where the longitudinal offset of the optical emitter is a location of the optical emitter in the longitudinal direction relative to the collimating light coupler. For example, the collimating light coupler may include a cylindrical grating coupler, such as reflection mode diffraction grating or a transmission mode diffraction grating.

Because the plurality of directional light beams having intensities and principal angular directions, the multiple view-zone multiview display may be configured to provide the multiview images. For example, the sets of diffraction gratings may provide the multiview images having different directions and, thus, the different angular ranges in the view zones in which the multiview images are visible. This capability may allow the multiple view-zone multiview display to concurrently provide different multiview images to different viewers.

In some embodiments, the light source may include a plurality of optical emitters have different colors with longitudinal offsets selected so that the group of muliview images provided by the collimated guided light beams for the different colors result in a composite multiview image in the angular range. The composite multiview image may have a color representing a combination of the different colors and relative illumination intensities of the different optical emitters.

Uses of the multiple view-zone multiview display described herein include, but are not limited to, mobile telephones (e.g., smart phones), watches, tablet computes, mobile computers (e.g., laptop computers), personal computers and computer monitors, automobile display consoles, a heads up display, camera displays, and various other mobile as well as substantially non-mobile display applications and devices. For example, a multiple view-zone multiview display may provide static heads-up multiview images through a windshield or a window of an automobile. Consequently, as noted previously, a multiple view-zone multiview display in the present discussion may comprise a light guide that is transparent to light propagating in a direction orthogonal a direction of propagation of a collimated guided light beam of the plurality of collimated guided light beams within the light guide, with the sets of diffraction gratings disposed on a surface of the light guide to steer or provide the directional light beams that represents the multiview images in the angular ranges in the view zones.

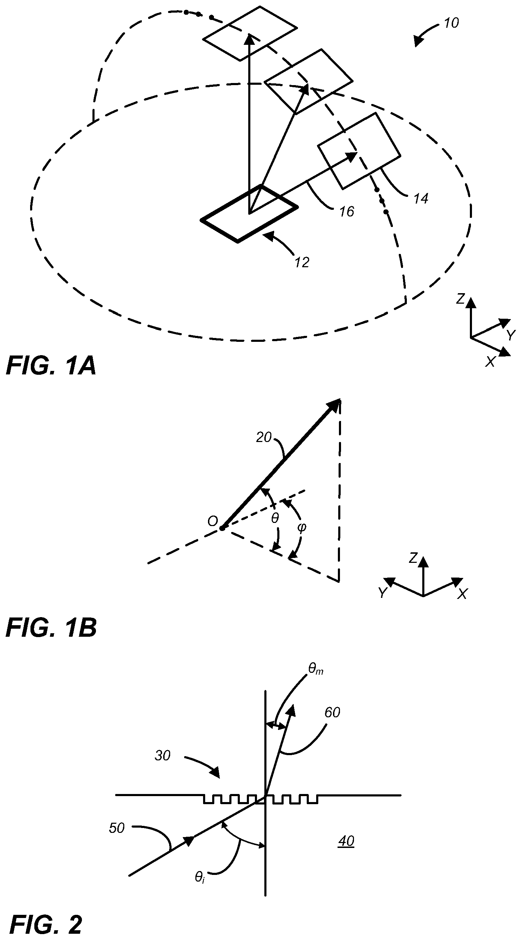

Herein, a 'multiview display' is defined as an electronic display or display system configured to provide different views of a multiview image in different view directions. Figure 1A illustrates a perspective view of a multiview display 10 in an example, according to an embodiment consistent with the principles described herein. As illustrated in Figure 1A, the multiview display 10 comprises a diffraction grating on a screen 12 to display view pixels in views 14 in a multiview image. The screen 12 may be a display screen of a telephone (e.g., mobile telephone, smart phone, etc.), a tablet computer, a laptop computer, a computer monitor of a desktop computer, a camera display, a heads up display, an automobile display, or an electronic display of substantially any other device, for example. The multiview display 10 provides different views 14 of the multiview image in different view or principal angular directions 16 relative to the diffraction grating on the screen 12. The view directions 16 are illustrated as arrows extending from the screen 12 in various different principal angular directions; the different views 14 are illustrated as polygonal boxes at the termination of the arrows (i.e., depicting the view directions 16); and only four views 14 and four view directions 16 are illustrated, all by way of example and not limitation. Note that while the different views 14 are illustrated in Figure 1A as being above the screen 12, the views 14 actually appear on or in a vicinity of the screen 12 when the multiview image is displayed on the multiview display 10. Depicting the views 14 above the screen 12 is only for simplicity of illustration and is meant to represent viewing the multiview display 10 from a respective one of the view directions 16 corresponding to a particular view 14. Similarly, while views 14 are depicted along an arc around the y axis, this is also for simplicity of illustration and is not intended to be limiting.

A view direction or equivalently a light beam having a direction corresponding to a view direction of a multiview display generally has a principal angular direction given by angular components $\{\theta, \phi\}$, by definition herein. The angular component $\theta$ is referred to herein as the 'elevation component' or 'elevation angle' of the light beam. The angular component $\phi$ is referred to as the 'azimuth component' or 'azimuth angle' of the light beam. By definition, the elevation angle $\theta$ is an angle in a vertical plane (e.g., perpendicular to a plane of the multiview display screen while the azimuth angle $\phi$ is an angle in a horizontal plane (e.g., parallel to the multiview display screen plane). Figure 1B illustrates a graphical representation of the angular components $\{\theta, \phi\}$ of a light beam 20 having a particular principal angular direction corresponding to a view direction (e.g., view direction 16 in Figure 1A) of a multiview display in an example, according to an embodiment consistent with the principles described herein. In addition, the light beam 20 is emitted or emanates from a particular point, by definition herein. That is, by definition, the light beam 20 has a central ray associated with a particular point of origin within the multiview display. Figure 1B also illustrates the light beam (or view direction) point of origin O.

Further herein, the term 'multiview' as used in the terms 'multiview image' and 'multiview display' is defined as a plurality of views representing different perspectives or including angular disparity between views of the view plurality. In addition, herein the term 'multiview' explicitly includes more than two different views (i.e., a minimum of three views and generally more than three views), by definition herein. As such, 'multiview display' as employed herein is explicitly distinguished from a stereoscopic display that includes only two different views to represent a scene or an image. Note however, while multiview images and multiview displays include more than two views, by definition herein, multiview images may be viewed (e.g., on a multiview display) as a stereoscopic pair of images by selecting only two of the multiview views to view at a time (e.g., one view per eye).

In the multiview display, each of the diffraction gratings in the plurality of the diffraction gratings may constitute a view pixel in the multiview image. In particular, each of the diffraction gratings may provide a light beam (having an intensity and a principal angular direction) that represents a view pixel in a particular view of a multiview image provided by the multiview display. Thus, in some embodiments, each of the diffraction gratings may provide a light beam that contributes to a view of the multiview image. In some embodiments, the multiview display includes 640 x 480 or 307,200 diffraction gratings. In other embodiments, the multiview display includes 100 x 100 or 10,000 diffraction gratings.

Herein, a 'light guide' is defined as a structure that guides light within the structure using total internal reflection. In particular, the light guide may include a core that is substantially transparent at an operational wavelength of the light guide. In various examples, the term 'light guide' generally refers to a dielectric optical waveguide that employs total internal reflection to guide light at an interface between a dielectric material of the light guide and a material or medium that surrounds that light guide. By definition, a condition for total internal reflection is that a refractive index of the light guide is greater than a refractive index of a surrounding medium adjacent to a surface of the light guide material. In some embodiments, the light guide may include a coating in addition to or instead of the aforementioned refractive index difference to further facilitate the total internal reflection. The coating may be a reflective coating, for example. The light guide may be any of several light guides including, but not limited to, one or both of a plate or slab guide and a strip guide.

Further herein, the term 'plate' when applied to a light guide as in a 'plate light guide' is defined as a piece-wise or differentially planar layer or sheet, which is sometimes referred to as a 'slab' guide. In particular, a plate light guide is defined as a light guide configured to guide light in two substantially orthogonal directions bounded by a top surface and a bottom surface (i.e., opposite surfaces) of the light guide. Further, by definition herein, the top and bottom surfaces are both separated from one another and may be substantially parallel to one another in at least a differential sense. That is, within any differentially small section of the plate light guide, the top and bottom surfaces are substantially parallel or co-planar.

In some embodiments, the plate light guide may be substantially flat (i.e., confined to a plane) and therefore, the plate light guide is a planar light guide. In other embodiments, the plate light guide may be curved in one or two orthogonal dimensions. For example, the plate light guide may be curved in a single dimension to form a cylindrical shaped plate light guide. However, any curvature has a radius of curvature sufficiently large to ensure that total internal reflection is maintained within the plate light guide to guide light.

Herein, a 'diffraction grating' is generally defined as a plurality of features (i.e., diffractive features) arranged to provide diffraction of light incident on the diffraction grating. In some examples, the plurality of features may be arranged in a periodic or quasi-periodic manner having one or more grating spacings between pairs of the features. For example, the diffraction grating may comprise a plurality of features (e.g., a plurality of grooves or ridges in a material surface) arranged in a one-dimensional (1D) array. In other examples, the diffraction grating may be a two-dimensional (2D) array of features. The diffraction grating may be a 2D array of bumps on or holes in a material surface, for example.

As such, and by definition herein, the 'diffraction grating' is a structure that provides diffraction of light incident on the diffraction grating. If the light is incident on the diffraction grating from a light guide, the provided diffraction or diffractive scattering may result in, and thus be referred to as, 'diffractive coupling' in that the diffraction grating may couple light out of the light guide by diffraction. The diffraction grating also redirects or changes an angle of the light by diffraction (i.e., at a diffractive angle). In particular, as a result of diffraction, light leaving the diffraction grating generally has a different propagation direction than a propagation direction of the light incident on the diffraction grating (i.e., incident light). The change in the propagation direction of the light by diffraction is referred to as 'diffractive redirection' herein. Hence, the diffraction grating may be understood to be a structure comprising diffractive features that diffractively redirects light incident on the diffraction grating and, if the light is incident from a light guide, the diffraction grating may also diffractively couple out the light from the light guide.

Further, by definition herein, the features of a diffraction grating are referred to as 'diffractive features' and may be one or more of at, in and on a material surface (i.e., a boundary between two materials). The surface may be a surface of a light guide, for example. The diffractive features may include any of a variety of structures that diffract light including, but not limited to, one or more of grooves, ridges, holes and bumps at, in or on the surface. For example, the diffraction grating may include a plurality of substantially parallel grooves in the material surface. In another example, the diffraction grating may include a plurality of parallel ridges rising out of the material surface. The diffractive features (e.g., grooves, ridges, holes, bumps, etc.) may have any of a variety of cross-sectional shapes or profiles that provide diffraction including, but not limited to, one or more of a sinusoidal profile, a rectangular profile (e.g., a binary diffraction grating), a triangular profile and a saw tooth profile (e.g., a blazed grating).

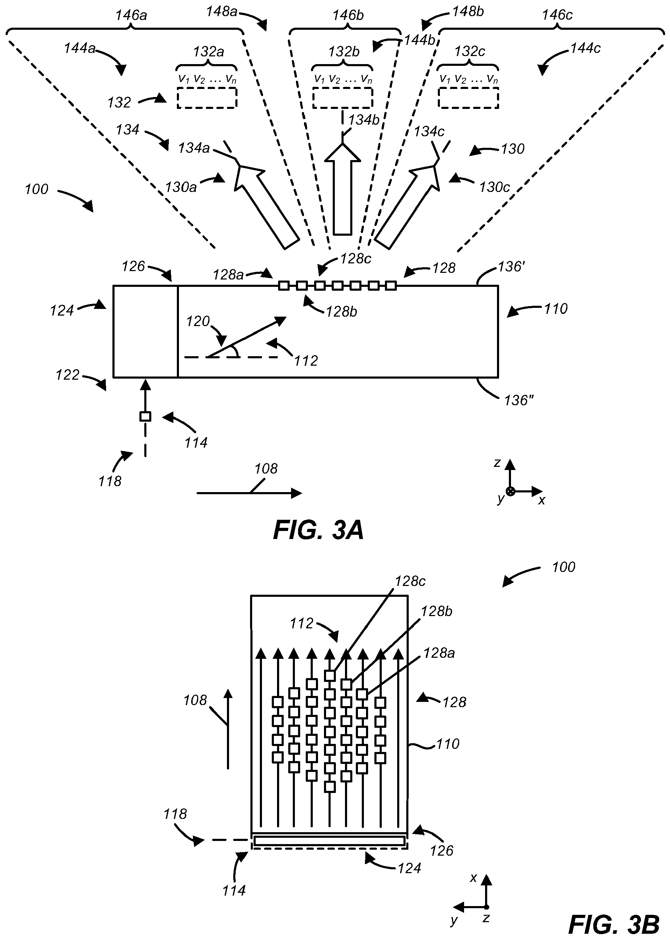

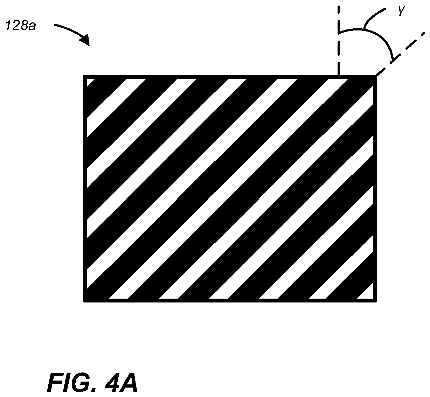

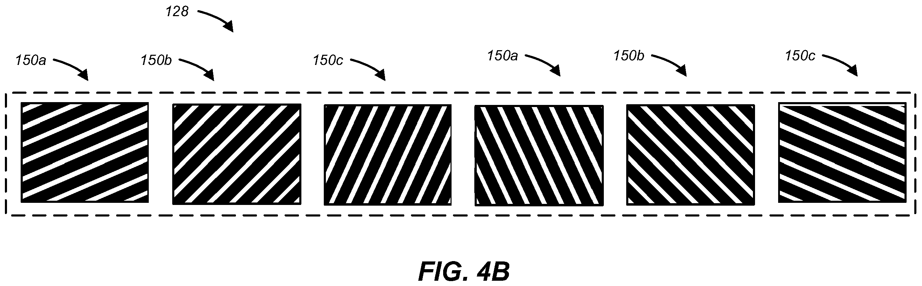

As described further below with reference to Figures 4A and 4B, a diffraction grating herein may have a grating characteristic, including one or more of a feature spacing or pitch, an orientation and a size (such as a width or length of the diffraction grating). As described further below with reference to Figures 3A-3C, the grating characteristic may be a function of the propagation angle of collimated guided light beams, a color of the collimated guided light beams or both. For example, the grating characteristic of a diffraction grating may depend on a longitudinal offset of an optical emitter in the light source and a location of the diffraction grating. By appropriately varying the grating characteristic of the diffraction grating, an intensity and a principal angular direction of a light beam diffracted by the diffraction grating (which is sometimes referred to as a 'directional light beam') corresponds to an intensity and a view direction of a view pixel of the multiview image.

According to various examples described herein, a diffraction grating (e.g., a diffraction grating of a multiview display, as described below) may be employed to diffractively scatter or couple light out of a light guide (e.g., a plate light guide) as a light beam. In particular, a diffraction angle $\theta_m$ of or provided by a locally periodic diffraction grating may be given by equation (1) as:

$$\theta_m = \sin^{-1}\left(n \sin \theta_i - \frac{m\lambda}{d}\right) \tag{1}$$

where $\lambda$ is a wavelength of the light (which corresponds to its color), $m$ is a diffraction order, $n$ is an index of refraction of a light guide, $d$ is a distance or spacing between features of the diffraction grating, $\theta_i$ is an angle of incidence of light on the diffraction grating (i.e., the propagation angle). For simplicity, equation (1) assumes that the diffraction grating is adjacent to a surface of the light guide and a refractive index of a material outside of the light guide is equal to one (i.e., $n_{out} = 1$). In general, the diffraction order $m$ is given by an integer. A diffraction angle $\theta_m$ of a light beam produced by the diffraction grating may be given by equation (1) where the diffraction order is positive (e.g., $m > 0$). For example, first-order diffraction is provided when the diffraction order $m$ is equal to one (i.e., $m$ = 1).

Figure 2 illustrates a cross-sectional view of a diffraction grating 30 in an example, according to an embodiment consistent with the principles described herein. For example, the diffraction grating 30 may be located on a surface of a light guide 40. In addition, Figure 2 illustrates a light beam (or a collection of light beams) 50 incident on the diffraction grating 30 at an incident angle $\theta_i$. The light beam 50 is a collimated guided light beam within the light guide 40. Also illustrated in Figure 2 is a coupled-out light beam (or a collection of light beams) 60 diffractively produced and coupled-out by the diffraction grating 30 as a result of diffraction of the incident light beam 50. The coupled-out light beam 60 has a diffraction angle $\theta_m$ (or 'principal angular direction' herein) as given by equation (1). The coupled-out light beam 60 may correspond to a diffraction order '$m$' of the diffraction grating 30, for example.

According to various embodiments, the principal angular direction of the various light beams is determined by the grating characteristic including, but not limited to, one or more of a size (e.g., a length, a width, an area, etc.) of the diffraction grating, an orientation, a feature spacing, and a grating depth. Further, a light beam produced by the diffraction grating has a principal angular direction given by angular components $\{\theta, \phi\}$, by definition herein, and as described above with respect to Figure 1B.

As described further below with reference to Figures 3A-3C, the multiview display may be based on the ability to couple out light from a light guide and, in particular, to steer a directional light beam in a principal angular direction in a view zone using a diffraction grating at a particular location on the light guide. A single directional light beam from a diffraction grating (having an intensity and a principal angular direction) represents a view pixel in a particular view of a multiview image of a multiview display. The diffraction grating on the light guide is effectively an angle preserving coupling structure in which the angle of emission relative to the angle of incidence is determined by the grating equation, i.e., equation (1). Thus, a single monochromatic light beam incident to the diffraction grating may produce or output a single directional light beam for a particular diffraction order of the diffraction grating.

In some embodiments, the guided light in the light guide is at least partially collimated along the longitudinal direction, the vertical direction or both. For example, the light source may provide at least partially collimated light, the light guide may, at least in part, collimate the guided light, and/or the multiview display may comprise a collimator. Thus, in some embodiments, one or more components in the multiview display performs the function of a collimator.

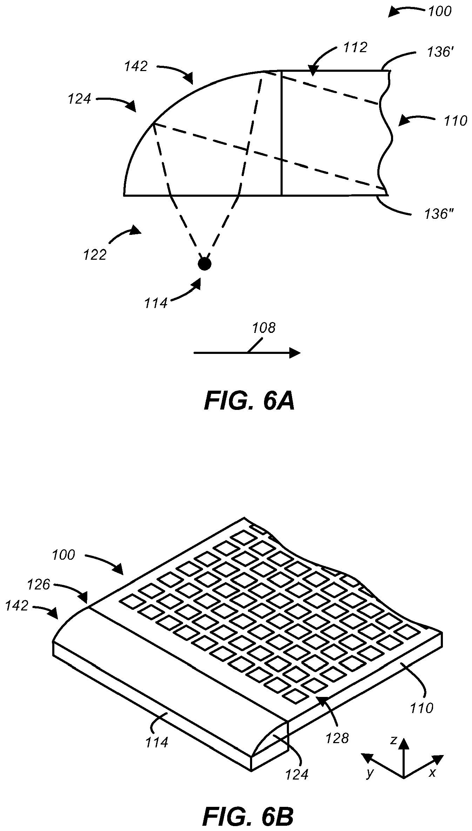

Herein, a 'collimated light' or 'collimated light beam' is generally defined as a beam of light in which rays of the light beam are substantially parallel to one another within the light beam (e.g., the collimated guided light beam in the light guide). Further, rays of light that diverge or are scattered from the collimated light beam are not considered to be part of the collimated light beam, by definition herein. Moreover, herein a 'collimator' is defined as substantially any optical device or apparatus that is configured to collimate light. For example, a collimator may include, but is not limited to, a collimating mirror or reflector, a collimating lens, and various combinations thereof. In some embodiments, the collimator comprising a collimating reflector may have a reflecting surface characterized by a parabolic curve or shape. As described further below with reference to Figures 6A and 6B, in another example the collimating reflector may comprise a shaped parabolic reflector. By 'shaped parabolic' it is meant that a curved reflecting surface of the shaped parabolic reflector deviates from a 'true' parabolic curve in a manner determined to achieve a predetermined reflection characteristic (e.g., a degree of collimation). Similarly, a collimating lens may comprise a spherically shaped surface (e.g., a biconvex spherical lens).

In some embodiments, the collimator may be a continuous reflector or a continuous lens (i.e., a reflector or lens having a substantially smooth, continuous surface). In other embodiments, the collimating reflector or the collimating lens may comprise a substantially discontinuous surface such as, but not limited to, a Fresnel reflector or a Fresnel lens that provides light collimation. According to various embodiments, an amount of collimation provided by the collimator may vary in a predetermined degree or amount from one embodiment to another. Further, the collimator may be configured to provide collimation in one or both of two orthogonal directions (e.g., a longitudinal direction and a vertical direction). That is, the collimator may include a shape in one or both of two orthogonal directions that provides light collimation, according to some embodiments.

Herein, a 'collimation factor' is defined as a degree to which light is collimated. In particular, a collimation factor defines an angular spread of light rays within a collimated beam of light, by definition herein. For example, a collimation factor $\sigma$ may specify that a majority of light rays in a beam of collimated light is within a particular angular spread (e.g., +/- $\sigma$ degrees about a central or principal angular direction of the collimated light beam). The light rays of the collimated light beam may have a Gaussian distribution in terms of angle and the angular spread be an angle determined by at one-half of a peak intensity of the collimated light beam, according to some examples.

Herein, a 'light source' is defined as a source of light (e.g., one or more optical emitters configured to produce and emit light). For example, the light source may comprise an optical emitter such as a light emitting diode (LED) that emits light when activated or turned on. In particular, herein the light source may be substantially any source of light or comprise substantially any optical emitter including, but not limited to, one or more of a light emitting diode (LED), a laser, an organic light emitting diode (OLED), a polymer light emitting diode, a plasma-based optical emitter, a fluorescent lamp, an incandescent lamp, and virtually any other source of light. The light produced by the light source may have a color (i.e., may include a particular wavelength of light), or may be a range of wavelengths (e.g., white light). In some embodiments, the light source may comprise a plurality of optical emitters. For example, the light source may include a set or group of optical emitters in which at least one of the optical emitters produces light having a color, or equivalently a wavelength, that differs from a color or wavelength of light produced by at least one other optical emitter of the set or group. The different colors may include primary colors (e.g., red, green, blue) for example.

Further, as used herein, the article 'a' is intended to have its ordinary meaning in the patent arts, namely 'one or more'. For example, 'a diffraction grating' means one or more diffraction gratings and as such, 'the diffraction grating' means 'the diffraction grating(s)' herein. Also, any reference herein to 'top', 'bottom', 'upper', 'lower', 'up', 'down', 'front', back', 'first', 'second', 'left' or 'right' is not intended to be a limitation herein. Herein, the term 'about' when applied to a value generally means within the tolerance range of the equipment used to produce the value, or may mean plus or minus 10%, or plus or minus 5%, or plus or minus 1%, unless otherwise expressly specified. Further, the term 'substantially' as used herein means a majority, or almost all, or all, or an amount within a range of about 51% to about 100%. Moreover, examples herein are intended to be illustrative only and are presented for discussion purposes and not by way of limitation.

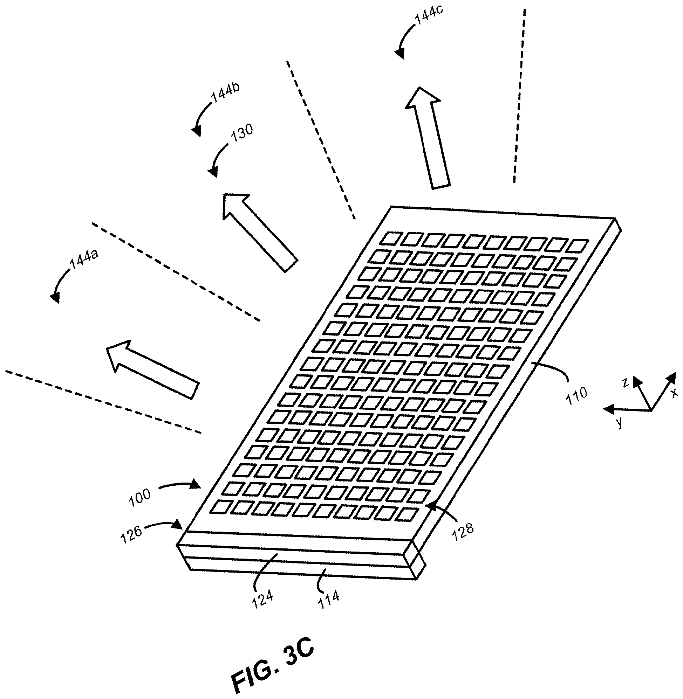

According to some embodiments of the principles described herein, a multiple view-zone multiview display is provided. Figure 3A illustrates a cross-sectional view of a multiple view-zone multiview display 100, Figure 3B illustrates a top view of the multiple view-zone multiview display 100, and Figure 3C illustrates a perspective view of the multiple view-zone multiview display 100 in an example, according to an embodiment consistent with the principles described herein. Multiple view-zone multiview display 100 may comprise a light guide 110, such as a plate light guide. The light guide 110 may guide light along a longitudinal direction 108 of the light guide 110 as collimated guided light beams 112. For example, the light guide 110 may include a dielectric material configured as an optical waveguide. The dielectric material may have a first refractive index that is greater than a second refractive index of a medium surrounding the dielectric optical waveguide. The difference in refractive indices is configured to facilitate total internal reflection of the collimated guided light beams 112 according to one or more guided modes of the light guide 110, for example. Note that the longitudinal direction 108 may define a general or net propagation direction of the collimated guided light beams 112.

In some embodiments, the light guide 110 may be a slab or plate optical waveguide comprising an extended, substantially planar sheet of optically transparent, dielectric material. The substantially planar sheet of dielectric material is configured to guide the collimated guided light beams 112 using total internal reflection. According to various examples, the optically transparent material of the light guide 110 may include or be made up of any of a variety of dielectric materials including, but not limited to, one or more of various types of glass (e.g., silica glass, alkali-aluminosilicate glass, borosilicate glass, etc.) and substantially optically transparent plastics or polymers (e.g., poly(methyl methacrylate) or 'acrylic glass', polycarbonate, etc.). In some examples, the light guide 110 may further include a cladding layer (not illustrated) on at least a portion of a surface (e.g., one or both of the top surface and the bottom surface) of the light guide 110. The cladding layer may be used to further facilitate total internal reflection, according to some examples.

Moreover, multiple view-zone multiview display 100 may comprise a light source 114 (such as an optical emitter) having a longitudinal position 118 in the longitudinal direction 108 and optically coupled to the light guide 110. The light source 114 may provide within the light guide 110 a collimated guided light beam 112 having a non-zero propagation angle 120 determined by a longitudinal position 118 of the light source 114. In some embodiments, the longitudinal position 118 is zero. Further, the light source 114 may be located adjacent to an entrance surface or end (input end) of the light guide 110, and the light source 114 may provide light 122 that is coupled into the light guide 110 by a collimated optical coupler 124, such that the collimated guided light beams 112 have the non-zero propagation angle 120 (e.g., about 30-35 degrees) and generally propagate away from the input end along the longitudinal direction 108 (e.g., along a x-axis in Figure 3A).

In various embodiments, the light source 114 may comprise substantially any source of light (e.g., an optical emitter) including, but not limited to, one or more light emitting diodes (LEDs) or a laser (e.g., laser diode). In some embodiments, the light source 114 is configured to produce a substantially monochromatic light having a narrowband spectrum denoted by a particular color. In particular, the color of the monochromatic light may be a primary color of a particular color space or color model (e.g., an RGB color model). Alternatively, in some embodiments, there may be multiple optical emitters in the light source 114 at different longitudinal offsets or positions that may produce light 122 having different colors, i.e., the color of the light 122 from the optical emitters at the different longitudinal offsets or positions may be different. Thus, the light source 114 may comprise a plurality of different optical emitters configured to provide different colors of light. Moreover, the different optical emitters may be configured to provide light 122 having different, color-specific, non-zero propagation angles 120 of the collimated guided light beams 112 corresponding to each of the different colors of light.

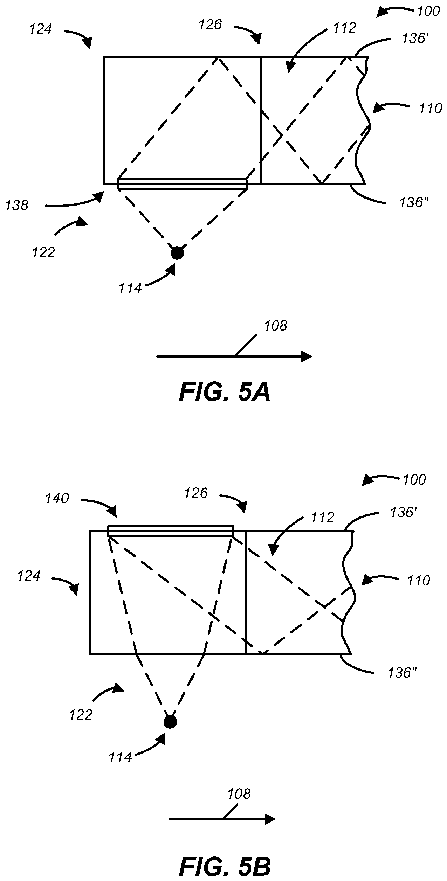

Embodiments of a cylindrical grating coupler that can be used as the collimated optical coupler 124 are described further below with reference to Figure 5A-6B. In other embodiments, collimated optical coupler 124 may include one of: a lens (such as a cylindrical lens), a mirror or similar reflector (e.g., a tilted collimating reflector), and a prism (not illustrated) may facilitate coupling light into an input end of the light guide 110 as the collimated guided light beams 112 at the average non-zero propagation angle 120, for example.

The light guide 110 is configured to guide the collimated guided light beams 112 according to total internal reflection at the average non-zero propagation angle 120 between a first surface 136' (e.g., 'front' surface or side) and a second surface 136" (e.g., 'back' surface or side) of the light guide 110. In particular, the collimated guided light beams 112 propagates by reflecting or 'bouncing' zero or more times between the first surface 136' and the second surface 136" of the light guide 110 at the non-zero propagation angle 120.

As defined herein, a 'non-zero propagation angle' (such as propagation angle 120) is an angle relative to a surface (e.g., the first surface 136' or the second surface 136") of the light guide 110. Further, the non-zero propagation angle is both greater than zero and less than a critical angle of total internal reflection within the light guide 110, according to various embodiments. For example, the average non-zero propagation angle 120 of the collimated guided light beams 112 may be between about ten (10) degrees and about fifty (50) degrees or, in some examples, between about twenty (20) degrees and about forty (40) degrees, or between about twenty-five (25) degrees and about thirty-five (35) degrees. For example, a non-zero propagation angle may be about thirty (30) degrees. In other examples, a non-zero propagation angle may be about 20 degrees, or about 25 degrees, or about 35 degrees. Moreover, a specific non-zero propagation angle may be chosen (e.g., arbitrarily) for a particular implementation as long as the specific non-zero propagation angle is chosen to be less than the critical angle of total internal reflection within the light guide 110.

As shown in Figure 3B, multiple view-zone multiview display 100 may comprise sets of diffraction gratings 128 on first surface 136', such as diffraction grating 128a in a first set of diffraction gratings, diffraction grating 128b in a second set of diffraction gratings and diffraction grating 128c in a third set of diffraction gratings. These sets of diffraction gratings may be spatially interspersed or interdigitated on a surface of the light guide 110 (such as surface 136'). For example, the diffraction gratings in a set of diffraction gratings may be evenly spaced. While the described embodiments illustrate multiple view-zone multiview display 100 with three set of diffraction gratings 128, in other embodiments there may be fewer or more sets of diffraction gratings. In general, multiple view-zone multiview display 100 includes two or more sets of diffraction gratings 128. Referring back to Figure 3A, the sets diffraction gratings 128 emit directional light beams 130 (such as directional light beams 130a and 130c) representing multiview images 132 (such as multiview images 132a, 132b and 132c). Note that each of the multiview images 132 has an associated one of central view directions 134 (such as central view directions 134a, 134b and 134c), and other views in the multiview images 132 are relative to the central view directions 134. Moreover, the multiview images 132 are exclusively viewable in corresponding non-overlapping view zones 144a, 144b, 144c having angular ranges 146a, 146b, 146c. Thus, the angular ranges are mutually exclusive, and a multiview image may only be viewable in a corresponding view zone. In some embodiments, adjacent view zones are separated by blank zones 148a, 148b in which multiview images 132 are not visible. Note that multiview images 132 in the view zones may be different from each other, i.e., different multiview images may be viewable in different view zones.

For example, the directional light beams 130a emitted by the first set of diffraction gratings may create the multiview image 132a (having views v1, v2 and v3 in view zone 144a, and a central view direction 134a in angular range 146a) from a transparent light guide 110 that is illuminated from side 126, which facilitates the display of information having 3D content. Each of the diffraction gratings in the first set of diffraction grating provides from a portion of a collimated guided light beam of the collimated guided light beam plurality 112 a directional light beam in directional light beams 130 having an intensity and a principal angular direction corresponding to an intensity and a view direction of a view pixel of the multiview image 132a. In some embodiments, the diffraction gratings in the sets of diffraction gratings 128 generally do not intersect, overlap or otherwise touch one another, according to some embodiments. That is, each diffraction grating in the sets of diffraction gratings 128 is generally distinct and separated from other diffraction gratings in the sets of diffraction gratings 128.

The directional light beams 130 (such as direction light beams 130a) may, at least in part, propagate in a direction orthogonal to longitudinal direction 108, i.e., to an average direction of propagation of a collimated guided light beam of the collimated guided light beam plurality 112 within the light guide 110. In particular, the light guide 110 and the spaced apart sets of diffraction gratings 128 allow light to pass through the light guide 110 through either or both the first surface 136' and the second surface 136", in some embodiments. Thus, the light guide 110 is transparent to light propagating in the direction orthogonal to the average direction of propagation of the collimated guided light beam of the collimated guided light beam plurality 112. The transparency may be facilitated, at least in part, by the substantially transparency of the diffraction gratings in the sets of diffraction gratings 128. Note that the intensity and the principal angular direction of the directional light beam from a single diffraction grating (such as diffraction grating 128a) may correspond to a view pixel in a view in the multiview image 132a in view zone 144a of multiple view-zone multiview display 100.

As discussed previously, each of the diffraction gratings in the sets of diffraction gratings 128 has an associated grating characteristic that depends on the color and the propagation angle of at least the portion of the collimated guided light beams 112 that are diffractively coupled by the diffraction grating. Stated differently, an associated grating characteristic of a diffraction grating in the sets of diffraction gratings 128 depends on the color and the propagation angle of at least the portion of the collimated guided light beams 112.

In general, the grating characteristic may include one or more of a feature spacing or pitch, a grating depth, an orientation and a size of the diffraction grating. Moreover, the varying grating characteristics of the diffraction gratings in each of the sets of diffraction gratings 128 may ensure that these diffraction gratings contribute to the same matching views of the corresponding multiview image 132. This is illustrated in Figure 3B by the diffraction gratings 128a, 128b and 128c at spatial coordinates $(x_1, y_1)$, $(x_2, y_2)$ and $(x_3, y_3)$, which have different grating characteristics to compensate for the different propagation directions of the plurality of collimated guided light beams 112 from the light source 114 that is incident on the sets of diffraction gratings 128.

In some embodiments, the diffraction-grating coupling efficiency (such as the diffraction-grating area, the groove depth or ridge height, etc.) increases as a function of the distance from side 126 to correct for the decrease in the intensity of the collimated guided light beams 112. Thus, an intensity of the directional light beam 130 provided by the diffraction gratings in the sets of diffraction gratings 128 and corresponding to an intensity of a corresponding view pixel is determined by a diffractive coupling efficiency of the diffraction grating 128.

As discussed previously, the collimated guided light beams 112 or equivalently the collimated guided light beams 112 produced by coupling light into the light guide 110 may be a collimated light beam. In some embodiments, the multiple view-zone multiview display 100 may include a collimator, such as a lens, reflector or mirror, as described above, (e.g., tilted collimating reflector) to collimate the light, e.g., from a light source. For example, the light guide 110 may include a collimator or may at least partially collimate the collimated guided light beams 112. In some embodiments, the light source 114 comprises a collimator, such as a lens on an LED. The collimated light provided to the light guide 110 is the collimated guided light beams 112, e.g., by a collimator between the light source 114 and the light guide 110 that efficiently couples light into the light guide 110, such as an external lens, a reflector, a parabolic reflector, a diffraction grating, a barrel collimator, etc. The collimated guided light beams 112 may be collimated according to or having a collimation factor, as described above, in various embodiments.

The collimator may be configured to receive substantially uncollimated light from the light source 114. The collimator is further configured to convert the substantially uncollimated light into collimated light. In particular, the collimator may provide collimated light having the non-zero propagation angle 120 and being collimated according to a predetermined collimation factor, according to some embodiments. Moreover, when multiple optical emitters of different colors are employed in the light source 114, the collimator may be configured to provide the collimated light having one or both of different, color-specific, non-zero propagation angles and having different color-specific collimation factors. The collimator is further configured to communicate the collimated light beam to the light guide 110 to propagate as the collimated guided light beams 112, described above.

As shown in Figures 3A-3C, diffraction gratings in the sets of diffraction gratings 128 may be located at or adjacent to the first surface 136', which is the light beam emission surface of the light guide 110. For example, the diffraction gratings in the sets of diffraction gratings 128 may be transmission mode diffraction gratings configured to diffractively couple out the guided light portion through the first surface 136' as the direction light beams 130. Alternatively, in some embodiments the diffraction gratings in the sets of diffraction gratings 128 are located at or adjacent to the second surface 136" opposite from a light beam emission surface of the light guide 110 (i.e., the first surface 136'). In particular, the diffraction gratings 128 may be reflection mode diffraction gratings. As reflection mode diffraction gratings, the diffraction gratings 128 are configured to both diffract the guided light portion and reflect the diffracted guided light portion toward the first surface 136' to exit through the first surface 136' as the diffractively coupled-out directional light beams 130. In other embodiments (not illustrated), the diffraction gratings 128 may be located between the surfaces of the light guide 110, e.g., as one or both of a transmission mode diffraction grating and a reflection mode diffraction grating. Note that, in some embodiments described herein, the principal angular directions of the coupled-out directional light beams 130 may include an effect of refraction due to the coupled-out directional light beams 130 exiting the light guide 110 at a light guide surface. For example, when the diffraction gratings 128 are located at or adjacent to second surface 136", the coupled-out direction light beams 130 may be refracted (i.e., bent) because of a change in refractive index as the coupled-out directional light beams 130 cross the first surface 136', by way of example and not limitation.

In some embodiments, the directional light beams 130 of the multiple view-zone multiview display 100 are emitted using diffraction, e.g., using diffraction gratings 128. Figure 4A illustrates a top view of a diffraction grating 128a in a first set of diffraction gratings in a multiple view-zone multiview display 100 in an example, according to another embodiment consistent with the principles described herein. Furthermore, Figure 4B illustrates a top view of sets of diffraction gratings 128 in a multiple view-zone multiview display 100 in an example, according to another embodiment consistent with the principles described herein. In particular, Figures 4A and 4B illustrate the diffraction grating 128 of the multiple view-zone multiview display 100. The diffraction grating 128 is configured to diffractively couple out a portion of the collimated guided light beams 112 (which may be monochromatic light) as a directional light beam in the plurality of directional light beams 130. Moreover, the diffraction gratings may be divided into sets, such as first set of diffraction gratings 150a, a second set of diffraction gratings 150b and a third set of diffraction gratings 150c, which, as described previously, correspond to different view zones 144.

Note that each of the diffraction gratings 128 comprises a plurality of diffractive features spaced apart from one another by a diffractive feature spacing (which is sometimes referred to as a 'grating spacing') or a diffractive feature or grating pitch configured to provide diffractive coupling out of the guided light portion. According to various embodiments, the spacing or grating pitch of the diffractive features in the diffraction grating 128 may be sub-wavelength (i.e., less than a wavelength of the collimated guided light beams 112). Note that, while Figures 4A and 4B illustrate the diffraction gratings 128 having a single grating spacing (i.e., a constant grating pitch), for simplicity of illustration. In various embodiments, as described below, the diffraction grating 128 may include a plurality of different grating spacings (e.g., two or more grating spacings) or a variable grating spacing or pitch to provide the direction light beams 130 in Figures 3A-3C. Consequently, Figures 4A and 4B do not imply that a single grating pitch is an embodiment of diffraction grating 128.

According to some embodiments, the diffractive features of the diffraction grating 128 may comprise one or both of grooves and ridges that are spaced apart from one another. The grooves or the ridges may comprise a material of the light guide 110, e.g., may be formed in a surface of the light guide 110. In another example, the grooves or the ridges may be formed from a material other than the light guide material, e.g., a film or a layer of another material on a surface of the light guide 110.

As discussed previously and shown in Figure 4A, the configuration of the diffraction features comprises a grating characteristic of the diffraction grating 128a. For example, a grating depth of the diffraction grating may be configured to determine the intensity of the directional light beam provided by the diffraction grating 128a. Alternatively or additionally, discussed previously and shown in Figure 4B, the grating characteristic comprises one or both of a grating pitch of the diffraction grating 128a and a grating orientation $\gamma$ of the diffraction grating 128a. In conjunction with the angle of incidence of the collimated guided light beams 112 (i.e., the propagation angle 120), these grating characteristics determine the principal angular direction of the directional light beam provided by the diffraction grating 128.

In some embodiments (not illustrated), the diffraction grating 128 configured to provide the directional light beams 130 is or comprises a variable or chirped diffraction grating. By definition, the 'chirped' diffraction grating is a diffraction grating exhibiting or having a diffraction spacing of the diffractive features (i.e., the grating pitch) that varies across an extent or length of the chirped diffraction grating. In some embodiments, the chirped diffraction grating may have or exhibit a chirp of the diffractive feature spacing that varies linearly with distance. As such, the chirped diffraction grating is a 'linearly chirped' diffraction grating, by definition. In other embodiments, the chirped diffraction grating of the multiple view-zone multiview display 100 may exhibit a non-linear chirp of the diffractive feature spacing. Various non-linear chirps may be used including, but not limited to, an exponential chirp, a logarithmic chirp or a chirp that varies in another, substantially non-uniform or random but still monotonic manner. Non-monotonic chirps such as, but not limited to, a sinusoidal chirp or a triangle or sawtooth chirp, may also be employed. Combinations of any of these types of chirps may also be employed.

In other embodiments, diffraction grating 128 configured to provide the directional light beams 130 is or comprises a plurality of diffraction gratings. In some embodiments, individual diffraction gratings of the plurality of diffraction gratings may be superimposed on one another. In other embodiments, the diffraction gratings may be separate diffraction gratings arranged next to one another, e.g., as an array.

As shown in Figure 4B, the diffraction gratings 128 in the sets of diffraction gratings 150a, 150b, 150c have different grating characteristics. For example, the diffraction gratings 128 have different grating orientations.

As discussed previously, the diffraction gratings 128 in the preceding embodiments may be located at the first surface 136' and/or the second surface 136" of the light guide 110. Moreover, the diffraction gratings 128 may be disposed on the first surface 136', the second surface 136" or between the first surface 136' and the second surface 136". Furthermore, a diffraction grating may be a 'positive feature' that protrudes out from the first surface 136' and/or the second surface 136", or it may be a 'negative feature' that is recessed into the first surface 136' and/or the second surface 136". In some embodiments, features in a diffraction grating are embossed directly in a material, are imprinted on a resin layer that is spun on a surface of a light guide, a laminated onto a surface of a light guide using, e.g., a separate roll-to-roll imprint sheet, etc.

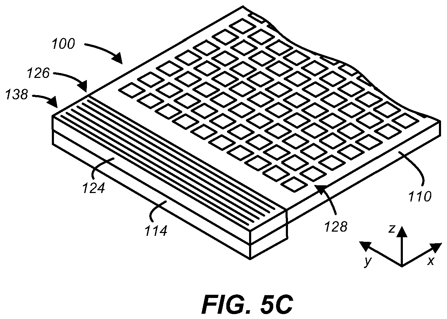

As noted previously, in some embodiments the collimated optical coupler 124 is a cylindrical grating coupler. Figure 5A illustrates a cross sectional view of a transmissive mode diffraction grating coupler 138, according to an example consistent with the principles described herein. Figure 5B illustrates a cross sectional view of a reflective mode diffraction grating coupler 140, according to another example consistent with the principles described herein. Figure 5C illustrates a perspective view of the reflective diffraction grating coupler 140, according to another example consistent with the principles described herein. In Figures 5A-5C, the grating-coupled light guide 110 is configured to couple light 122 into the grating-coupled light guide 110 as collimated guided light beams 112. The light 122 may be provided by a light source 114 (e.g. a substantially uncollimated light source), for example. According to various examples, the grating-coupled light guide 110 may provide a relatively high coupling efficiency. Moreover, the grating-coupled light guide 110 may transform the light 122 into collimated guided light 112 (e.g., beams of guided light) having a predetermined collimation factor within the grating-coupled light guide 110, according to various examples.

In particular, coupling efficiency of greater than about twenty percent (20%) may be achieved, according to some examples. For example, in a transmission configuration (described below), the coupling efficiency of the grating-coupled light guide 110 may be greater than about thirty percent (30%) or even greater than about thirty-five percent (35%). A coupling efficiency of up to about forty percent (40%) may be achieved, for example. In a reflection configuration, the coupling efficiency of the grating-coupled light guide 110 may be as high as about fifty percent (50%), or about sixty percent (60%) or even about seventy percent (70%), for example.

According to various examples, the predetermined collimation factor provided by and within the grating-coupled light guide 110 may provide the collimated guided light beams 112 having controlled or predetermined propagation characteristics. In particular, the grating-coupled light guide 110 may provide a controlled or predetermined collimation factor in a 'vertical' direction, i.e., in a plane perpendicular to a plane of a surface of the grating-coupled light guide 110. Further, the light 122 may be received from the light source 114 at an angle that is substantially perpendicular to the grating-coupled light guide plane and then transformed into the collimated guided light beams 112 having an average non-zero propagation angle 120 within the grating-coupled light guide 110, e.g., a non-zero propagation angle consistent with or less than a critical angle of total internal reflection within the grating-coupled light guide 110.

According to some examples, the grating coupler may be a transmissive grating coupler 138 (i.e., a transmission mode diffraction grating coupler), while in other examples, the grating coupler may be a reflective diffraction grating coupler 140 (i.e., a reflection mode diffraction grating coupler). In particular, as illustrated in Figure 5A, the grating coupler 138 may include a transmission mode diffraction grating at a surface of the light guide 110 adjacent to the light source 114. For example, the transmission mode diffraction grating of the grating coupler 138 may be on a bottom (or second) surface 136" of the light guide 110 and the light source 114 may illuminate the grating coupler 138 from the bottom. As illustrated in Figure 5A, the transmission mode diffraction grating of the grating coupler 138 is configured to diffractively redirect light 122 that is transmitted or passes through the transmission mode diffraction grating. Note that shifting the relative location of the light source 114 along the longitudinal direction 108 changes the diffraction angle and, thus, the propagation angle in the light guide 110.

Alternatively, as illustrated in Figure 5B, the grating coupler 140 may be a reflective diffraction grating coupler 140 having a reflection mode diffraction grating at a surface of the light guide 110 that is opposite to the surface adjacent to the light source 114. For example, the reflection mode diffraction grating of the grating coupler 140 may be on a top (or first) surface 136' of the light guide 110 and the light source 114 may illuminate the grating coupler 140 through a portion of the bottom (or second) surface 136" of the light guide 110. The reflection mode diffraction grating is configured to diffractively redirect light 122 into the light guide 110 using reflective diffraction (i.e., reflection and diffraction), as illustrated in Figure 5B.

According to various examples, the diffractive grating of the grating coupler 138 or 140 may include grooves, ridges or similar diffractive features of a diffraction grating formed or otherwise provided on or in the surface 136' or 136" of the light guide 110. For example, grooves or ridges may be formed in or on the light source-adjacent surface 136" (e.g., bottom or second surface) of the light guide 110 to serve as the transmission mode diffraction grating of the transmissive grating coupler 138. Similarly, grooves or ridges may be formed or otherwise provided in or on the surface 136' of the light guide 110 opposite to the light source-adjacent surface 136" to serve as the reflection mode diffraction grating of the reflective diffraction grating coupler 140, for example.

According to some examples, the grating coupler 138 or 140 may include a grating material (e.g., a layer of grating material) on or in the light guide surface. In some examples, the grating material may be substantially similar to a material of the light guide 110, while in other examples, the grating material may differ (e.g., have a different refractive index) from the light guide material. In some examples, the diffractive grating grooves in the light guide surface may be filled with the grating material. For example, grooves of the diffraction grating of either the transmissive grating coupler 138 or the reflective diffraction grating coupler 140 may be filled with a dielectric material (i.e., the grating material) that differs from a material of the light guide 110. The grating material of the grating coupler 138 or 140 may include silicon nitride, for example, while the light guide 110 may be glass, according to some examples. Other grating materials including, but not limited to, indium tin oxide (ITO) may also be used.

In other examples, either the transmissive grating coupler 138 or the reflective diffraction grating coupler 140 may include ridges, bumps, or similar diffractive features that are deposited, formed or otherwise provided on the respective surface of the light guide 110 to serve as the particular diffraction grating. The ridges or similar diffractive features may be formed (e.g., by etching, molding, etc.) in a dielectric material layer (i.e., the grating material) that is deposited on the respective surface of the light guide 110, for example. In some examples, the grating material of the reflective diffraction grating coupler 140 may include a reflective metal. For example, the reflective diffraction grating coupler 140 may be or include a layer of reflective metal such as, but not limited to, gold, silver, aluminum, copper and tin, to facilitate reflection by the reflection mode diffraction grating.

Note that the diffraction gratings in the transmissive grating coupler 138 and the reflective diffraction grating coupler 140 may be uniform along they direction. This is illustrated in Figure 5C, which provides a perspective view of a reflective mode diffraction grating coupler 140, according to another example consistent with the principles described herein.

While Figures 5A-5C illustrate the use of a diffractive grating coupler, in other embodiments other types of light couplers may be used. For example, Figure 6A illustrates a cross sectional view of a parabolic reflective coupler 142, according to an example consistent with the principles described herein. Figure 6B illustrates a perspective view of the parabolic reflective coupler 142, according to another example consistent with the principles described herein. As shown in Figure 6B, the parabolic reflective coupler 142 may be uniform along they direction.

In accordance with some embodiments of the principles described herein, a multiple view-zone multiview display is provided. The multiple view-zone multiview display is configured to emit a plurality of directional light beams provided by the multiple view-zone multiview display. Further, the emitted directional light beams may be preferentially directed toward a plurality of views of the multiple view-zone multiview display in different view zones based on the grating characteristics of the sets of diffraction grating that are included in the multiple view-zone multiview display. Moreover, the diffraction gratings in a set of diffraction gratings may produce different principal angular directions in the directional light beams, which corresponding to different viewing directions for different views of a multiview image in a view zone of the multiple view-zone multiview display. In some examples, the multiple view-zone multiview display is configured to provide or 'display' two or more 3D multiview images. Different ones of the directional light beams may correspond to individual view pixels of different 'views' associated with the multiview images in the different view zones, according to various examples. The different views may provide a 'glasses free' (e.g., autostereoscopic) representation of information in the multiview images being displayed by the multiple view-zone multiview display, for example.

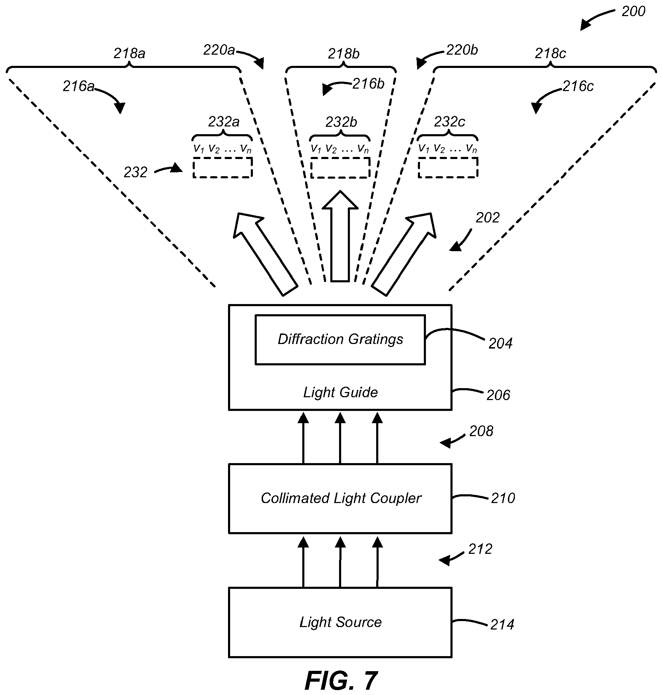

Figure 7 illustrates a block diagram of a multiple view-zone multiview display 200 in an example, according to an embodiment consistent with the principles described herein. According to various embodiments, the multiple view-zone multiview display 200 is configured to display multiview images 232 according to different views in different view directions, which are in mutually exclusive view zones 216a, 216b, 216c having angular ranges 218a, 218b, 218c. In particular, a plurality of directional light beams 202 emitted by the multiple view-zone multiview display 200 are used to display the multiview images 232 and may correspond to pixels of the different views (i.e., view pixels) in different view zones 216a, 216b, 216c. The directional light beams 202 are illustrated as arrows emanating from diffraction gratings 204 (which may include sets of diffraction gratings) in light guide 206. Note that the directional light beams 202 associated with the diffraction gratings 204 are quasi-static (i.e., not modulated). Instead, the directional light beams 202 associated with the diffraction gratings 204 either provide the directional light beams 202 when they are illuminated or do not provide the directional light beams 202 when they are not illuminated. In some embodiments, adjacent view zones are separated by blank zones 220a, 220b, in which multiview images 232 are not visible to viewers.

The multiple view-zone multiview display 200 illustrated in Figure 7 comprises the diffraction gratings 204. The diffraction gratings 204 are configured to provide a plurality of different views of the multiview images 232 of the multiple view-zone multiview display 200 in the view zones 216. According to various embodiments, a diffraction grating of a set of diffraction gratings is configured to diffractively couple out or emit a directional light beam of the plurality of directional light beams 202 into an angular range (such as angular range 218a) corresponding to a view zone (such as view zone 216a). The plurality of directional light beams 202 may have principal angular directions, which correspond to different views directions of different views of the multiview images 232 in different view zones 216 of a multiple view-zone multiview display. Moreover, grating characteristics of the diffraction gratings in the diffraction gratings 204 may be varied based on the propagation angles and the color of the incident light beams to the diffraction gratings (i.e., the collimated guided light beams 208 provided by a collimated light coupler 210). In some embodiments, the diffraction gratings in the diffraction gratings 204 are substantially similar to diffraction gratings 128, described above with respect to the multiple view-zone multiview display 100 and, e.g., in Figures 4A and 4B.

In the embodiments having the diffraction gratings 204, the multiple view-zone multiview display 200 may further comprise a light guide 206 configured to guide the collimated guided light beams 208. The diffraction gratings 204 may be configured to couple out a portion of the collimated guided light 208 from the light guide 206 as the plurality of directional light beams 202 (i.e., the collimated guided light 208 may be the incident light beams discussed above), according to these embodiments. In particular, the diffraction gratings in the diffraction gratings 204 may be optically connected to the light guide to couple out the portion of the collimated guided light 208. In some embodiments, grating characteristics of the diffraction gratings in the diffraction gratings 204 may be varied based on the propagation angles of incident collimated guided light 208 to the diffraction gratings, a color of the collimated guided light or both. In this way, the directional light beams 202 from different diffraction gratings in a set of diffraction gratings may correspond to the same views of a multiview image in a view zone provided by the multiple view-zone multiview display 200. In some embodiments, the light guide 206 of the multiple view-zone multiview display 200 may be substantially similar to the light guide 110 described above with respect to the multiple view-zone multiview display 100.

Further, in some of these embodiments, the multiple view-zone multiview display 200 may further comprise the collimated light coupler 210. The collimated light coupler 210 may be configured to receive light beams 212 from the optical emitter in a light source 214, and may collimated the incident light beams to provide the collimated light beams 208 to the light guide 206. Thus, in some embodiments, the collimated light coupler 210 collimates the incident light beams 212 according to a collimation factor to provide a predetermined angular spread of the collimated guided light 208 within the light guide 206. According to some embodiments, the collimated light coupler 210 may be substantially similar to optical coupler 124 in the multiple view-zone multiview display 100, described above.

Additionally, in some of these embodiments, the multiple view-zone multiview display 200 may further comprise a light source 214. The light source 214 may be configured to provide the light beams 212 to the light guide 206, which results in non-zero propagation angles of the collimated guided light 208 based on a longitudinal offset of the optical emitter in the light source 214. In some embodiments, the light beams 212 provided by the light source 214 is collimated according to a collimation factor to provide a predetermined angular spread of the collimated guided light 208 within the light guide 206, for example. According to some embodiments, the light source 214 may be substantially similar to the light source 114 of the multiple view-zone multiview display 100, described above.

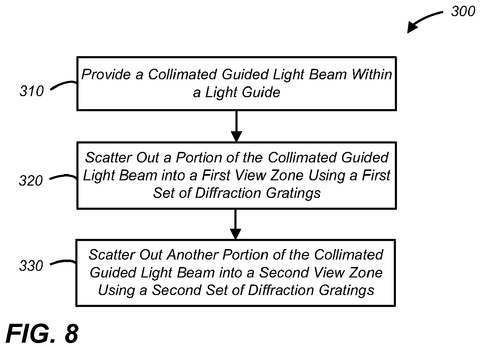

In accordance with other embodiments of the principles described herein, a method of multiple view-zone multiview display operation is provided. Figure 8 illustrates a flow chart of a method 300 of multiple view-zone multiview display operation in an example, according to an embodiment consistent with the principles described herein. As illustrated in Figure 8, the method 300 of multiple view-zone multiview display operation comprises diffractively scattering out 320 a portion of a collimated guided light beam from a light guide as directional light beams directed into a first view zone using a first set of diffraction gratings to represent a first multiview image visible in the first view zone. Moreover, the method 300 of multiple view-zone multiview display operation comprises diffractively scattering out 330 another portion of the collimated guided light beam from the light guide as directional light beams directed into a second view zone using a second set of diffraction gratings to represent a second multiview image visible in the second view zone, where the first and second view zones have different angular ranges from one another. Furthermore, the first multiview and second multiview image may be different from one another. For example, a passenger and a driver in an automobile may view different multiview images in the first and second view zones. Additionally, the first multiview image may be visible exclusively in the first view zone and the second multiview image may be visible exclusively in the second view zone. In some embodiments, the first view zone is separated from the second view zone by a blank zone. This may provide privacy and may require fewer pixels, which may improve the spatio-angular resolution. Note that the first set of diffraction gratings, the second set of diffraction gratings and the view zones may be substantially similar to sets of diffraction gratings 150 and view zones 144 of the multiple view-zone multiview display 100, described above.

Moreover, a principal angular direction of a directional light beam diffractively scattered out by a diffractive grating of the first diffraction grating set and the second diffraction grating set may be determined by a grating pitch and a grating orientation of the diffractive grating, and an intensity of the directional light beam may be determined by a grating depth of the diffraction grating. Furthermore, a principal angular direction of a directional light beam diffractively scattered out by a diffractive grating of the first diffraction grating set and the second diffraction grating set may be a function of both the color and the propagation angle of the collimated guided light beam. In particular, according to some embodiments, the diffraction gratings used in scattering out the portion 320 and the other portion 330 of the guided light may comprise diffraction gratings optically coupled to the light guide to diffractively couple out the collimated guided light portion as the one or more directional light beams. Note that the plurality of directional light beams produced by the first set of diffraction gratings and the second set of diffraction gratings may have different principal angular directions corresponding to different views of the multiview images in the first view zone and the second view zone. Each of the diffraction gratings produces a single directional light beam in a single principal angular direction corresponding to a view pixel in a multiview image. In various embodiments, grating characteristics of the plurality of diffraction gratings may be varied based on the propagation angles and the color of the incident collimated guided light beam to the diffraction gratings. In this way, the directional light beams from different diffraction gratings in a set of diffraction gratings may correspond to the views of a multiview image provided by a multiple view-zone multiview display.

In some embodiments, the method 300 of multiple view-zone multiview display operation further comprises providing 310 the collimated guided light beam within the light guide. For example, providing 310 the collimated guided beam may involve using an optical emitter in a light source to provide light having a color to the light guide. The optical emitter may be offset in a longitudinal direction. The provided light may be monochromatic. The provided light may become the collimated guided light beam that has a non-zero propagation angle within the light guide. In particular, the propagation angles of the resulting collimated guided light beam within the light guide may be determined based at least in part on the longitudinal offset of the optical emitter in the light source. The provided light may be collimated within the light guide (such as by a light coupler) according to a collimation factor to provide a predetermined angular spread of the collimated guided light beam within the light guide. In some embodiments, the light source may be substantially similar to the light source 114 of the multiple view-zone multiview display 100, described above.

In some embodiments, providing 310 the collimated guided beam may involve coupling the light into the light guide as collimated guided light beam using a collimating light coupler. For example, the light from the optical emitter in the light source may be coupled into the light guide as the collimated guided light beam. Moreover, the collimated guided light beam may have the propagation angle determined by a longitudinal offset of the optical emitter. In some embodiments, the light coupler collimates the incident light from the light source. Further, the light coupler may be substantially similar to the optical coupler 124 of the multiple view-zone multiview display 100, described above.

Thus, there have been described examples and embodiments of a multiple view-zone multiview display, a method of multiple view-zone multiview display operation, and a multiple view-zone multiview display that has diffraction gratings. The multiple view-zone multiview display, the method and the multiple view-zone multiview display employ the diffraction gratings to provide direction light beams. The plurality of directional light beams corresponds to views of multiview images in different view zones. Moreover, the sets of diffraction gratings are configured to provide a plurality of principal angular directions in the plurality of directional light beams. The principal angular directions correspond to the views of the multiview images in angular ranges corresponding to the view zones of the multiple view-zone multiview display. It should be understood that the above-described examples are merely illustrative of some of the many specific examples that represent the principles described herein. Clearly, those skilled in the art can readily devise numerous other arrangements without departing from the scope as defined by the following claims.

**Claims**

1. A multiple view-zone static multiview display (100) comprising:

   a light guide (110) configured to guide light;
   a light source (114) configured to provide within the light guide a collimated guided light beam; and
   a plurality of diffraction gratings (128) distributed across the light guide, a first set of diffraction gratings of the diffraction grating plurality being configured to scatter out a portion of the collimated guided light beam into a first view zone (144a) as directional light beams representing a first multiview image (132a) and a second set of diffraction gratings of the diffraction grating plurality being configured to scatter out another portion of the collimated guided light beam into a second view zone (144b) as directional light beams representing a second multiview image (132b); and
   **characterised in that**
   the first view zone is configured to have a first angular range and the second view zone is configured to have a second angular range, the first view zone and second view zone being mutually exclusive angular ranges.

2. The multiple view-zone static multiview display of Claim 1, wherein a diffraction grating of the diffraction grating plurality of either the first and second diffraction grating sets is configured to provide a directional light beam having an intensity and a principal angular direction corresponding to an intensity and a view direction of a view pixel of a corresponding one of the first and second multiview image.

3. The multiple view-zone static multiview display of Claim 2, wherein a grating characteristic of the diffraction grating is configured to determine the intensity and the principal angular direction, the grating characteristic configured to determine principal angular direction comprising one or both of a grating pitch of the diffraction grating and a grating orientation of the diffraction grating.

4. The multiple view-zone static multiview display of Claim 3, wherein the grating characteristic configured to determine the intensity comprises a grating depth of the diffraction grating.

5. The multiple view-zone static multiview display of Claim 1, wherein the first diffraction grating set and the second diffraction grating set are located on a surface of the light guide opposite to an emission surface of the light guide through which the portion of the collimated guided light beam is scattered out as a plurality of directional light beams representing the first and second multiview images.

6. The multiple view-zone static multiview display of Claim 1, further comprising a collimating light coupler at input of the light guide, the collimating light coupler being configured to optically couple light from the light source into the light guide input as the collimated guided light beam.

7. The multiple view-zone static multiview display of Claim 6, wherein the collimating light coupler comprises a cylindrical grating coupler, the light source being located adjacent to a guiding surface of the light guide and light source being configured to emit light through the guiding surface.

8. The multiple view-zone static multiview display of Claim 1, wherein the first view zone and the second view zone are separated from one another by a blank zone in which neither the first multiview image nor the second multiview images is visible.

9.  The multiple view-zone static multiview display of Claim 1, wherein the first multiview image is different from the second multiview image.

10. The multiple view-zone static multiview display of Claim 1, wherein the light guide and the sets of diffraction gratings are transparent to light propagating in a vertical direction orthogonal a longitudinal direction corresponding to a propagation direction of the guided light beam.

11. A method of multiple view-zone static multiview display (100) operation, the method comprising:

    providing a collimated guided light beam within a light guide (110);
    diffractively scattering out a portion of the guided light beam as directional light beams directed into a first view zone (144a) using a first set of diffraction gratings (128) to represent a first multiview image (132a) visible in the first view zone; and
    diffractively scattering out another portion of the guided light beam as directional light beams directed into a second view zone (144b) using a second set of diffraction gratings to represent a second multiview image (132b) visible in the second view zone,
    **characterised in that**
    the first and second view zones have mutually exclusive angular ranges from one another.

12. The method of multiple view-zone multiview display operation of Claim 11, wherein the first multiview and second multiview image are different from one another, the first multiview image being visible exclusively in the first view zone and the second multiview image being visible exclusively in the second view zone.

**Patentansprüche**

1.  Statische Mehrfachansichtanzeigevorrichtung (100) mit mehreren Ansichtzonen, die Folgendes umfasst:

    einen Lichtleiter (110), der konfiguriert ist, Licht zu führen;
    eine Lichtquelle (114), die konfiguriert ist, im Lichtleiter einen kollimierten geführten Lichtstrahl bereitzustellen; und
    mehrere Beugungsgitter (128), die über den Lichtleiter verteilt sind, wobei ein erster Satz Beugungsgitter der mehreren Beugungsgitter konfiguriert ist, aus einem Teil des kollimierten geführten Lichtstrahls in eine erste Ansichtzone (144a) als gerichtete Lichtstrahlen zu streuen, die ein erstes Mehrfachansichtbild (132a) repräsentieren, und ein zweiter Satz Beugungsgitter der mehreren Beugungsgitter konfiguriert ist, aus einem weiteren Teil des kollimierten geführten Lichtstrahls in eine zweite Ansichtzone (144b) als gerichtete Lichtstrahlen zu streuen, die ein zweites Mehrfachansichtbild (132b) repräsentieren;
    **dadurch gekennzeichnet, dass** die erste Ansichtzone konfiguriert ist, einen ersten Winkelbereich aufzuweisen, und die zweite Ansichtzone konfiguriert ist, einen zweiten Winkelbereich aufzuweisen, wobei die erste Ansichtzone und die zweite Ansichtzone sich gegenseitig ausschließende Winkelbereiche sind.

2.  Statische Mehrfachansichtanzeigevorrichtung mit mehreren Ansichtzonen nach Anspruch 1, wobei ein Beugungsgitter der mehreren Beugungsgitter entweder des ersten oder des zweiten Beugungsgittersatzes konfiguriert ist, einen gerichteten Lichtstrahl bereitzustellen, der eine Intensität und eine Hauptwinkelrichtung aufweist, die einer Intensität und einer Blickrichtung eines Ansichtpixels eines entsprechenden des ersten und des zweiten Mehrfachansichtbilds entsprechen.

3.  Statische Mehrfachansichtanzeigevorrichtung mit mehreren Ansichtzonen nach Anspruch 2, wobei eine Gittercharakteristik des Beugungsgitters konfiguriert ist, die Intensität und die Hauptwinkelrichtung zu bestimmen, und die Gittercharakteristik konfiguriert ist, eine Hauptwinkelrichtung zu bestimmen, die einen Gitterabstand des Beugungsgitters und/oder eine Gitterorientierung des Beugungsgitters umfasst.

4.  Statische Mehrfachansichtanzeigevorrichtung mit mehreren Ansichtzonen nach Anspruch 3, wobei die Gittercharakteristik, die konfiguriert ist, die Intensität zu bestimmen, eine Gittertiefe des Beugungsgitters umfasst.

5.  Statische Mehrfachansichtanzeigevorrichtung mit mehreren Ansichtzonen nach Anspruch 1, wobei der erste Beugungsgittersatz und der zweite Beugungsgittersatz an einer Oberfläche des Lichtleiters angeordnet sind, die einer Emissionsoberfläche des Lichtleiters gegenüberliegt, durch die der Teil des kollimierten geführten Lichtstrahls als mehrere gerichtete Lichtstrahlen, die das erste und das zweite Mehrfachansichtbild repräsentieren, herausgestreut wird.

**6.** Statische Mehrfachansichtanzeigevorrichtung mit mehreren Ansichtzonen nach Anspruch 1, die ferner einen Kollimierlichtkoppler am Eingang des Lichtleiters umfasst, wobei der Kollimierlichtkoppler konfiguriert ist, Licht von der Lichtquelle in den Lichtleitereingang als den kollimierten geführten Lichtstrahl optisch zu koppeln.

**7.** Statische Mehrfachansichtanzeigevorrichtung mit mehreren Ansichtzonen nach Anspruch 6, wobei der Kollimierlichtkoppler einen zylindrischen Gitterkoppler umfasst, die Lichtquelle benachbart zu einer Leiteroberfläche des Lichtleiters angeordnet ist und die Lichtquelle konfiguriert ist, Licht durch die Leiteroberfläche abzustrahlen.

**8.** Statische Mehrfachansichtanzeigevorrichtung mit mehreren Ansichtzonen nach Anspruch 1, wobei die erste Ansichtzone und die zweite Ansichtzone voneinander durch eine Austastszone getrennt sind, in der weder das erste Mehrfachansichtbild noch das zweite Mehrfachansichtbild sichtbar ist.

**9.** Statische Mehrfachansichtanzeigevorrichtung mit mehreren Ansichtzonen nach Anspruch 1, wobei das erste Mehrfachansichtbild vom zweiten Mehrfachansichtbild verschieden ist.

**10.** Statische Mehrfachansichtanzeigevorrichtung mit mehreren Ansichtzonen nach Anspruch 1, wobei der Lichtleiter und die Sätze von Beugungsgittern für Licht durchsichtig sind, das sich in einer vertikalen Richtung senkrecht zu einer Längsrichtung ausbreitet, die einer Ausbreitungsrichtung des geführten Lichtstrahls entspricht.

**11.** Verfahren zum Betrieb statischer Mehrfachansichtanzeigevorrichtungen (100) mit mehreren Ansichtzonen, wobei das Verfahren Folgendes umfasst:

Bereitstellen eines kollimierten geführten Lichtstrahls in einem Lichtleiter (110);
beugendes Herausstreuen eines Teils des geführten Lichtstrahls als gerichtete Lichtstrahlen, die in eine erste Ansichtzone (144a) gerichtet sind, unter Verwendung eines ersten Satzes Beugungsgitter (128), um ein erstes Mehrfachansichtbild (132a) in der ersten Ansichtzone sichtbar darzustellen; und
beugendes Herausstreuen eines weiteren Teils des geführten Lichtstrahls als gerichtete Lichtstrahlen, die in eine zweite Ansichtzone (144b) gerichtet sind, unter Verwendung eines zweiten Satzes Beugungsgitter, um ein zweites Mehrfachansichtbild (132b) in der zweiten Ansichtzone sichtbar darzustellen,
**dadurch gekennzeichnet, dass** die erste und die zweite Ansichtzone einander gegenseitig ausschließende Winkelbereiche aufweisen.

**12.** Verfahren zum Betrieb von Mehrfachansichtanzeigevorrichtungen mit mehreren Ansichtzonen nach Anspruch 11, wobei das erste Mehrfachansichtbild und das zweite Mehrfachansichtbild voneinander verschieden sind, das erste Mehrfachansichtbild ausschließlich in der ersten Ansichtzone sichtbar ist und das zweite Mehrfachansichtbild ausschließlich in der zweiten Ansichtzone sichtbar ist.

**Revendications**

**1.** Écran multivue statique à multiples zones de vue (100) comprenant :

un guide de lumière (110) configuré pour guider la lumière ;
une source de lumière (114) configurée pour délivrer à l'intérieur du guide de lumière un faisceau lumineux guidé collimaté ; et
une pluralité de réseaux de diffraction (128) répartis d'un bout à l'autre du guide de lumière, un premier ensemble de réseaux de diffraction de la pluralité de réseaux de diffraction étant configuré pour diffuser à l'extérieur une partie du faisceau lumineux guidé collimaté à l'intérieur d'une première zone de vue (144a) sous la forme de faisceaux lumineux directionnels représentant une première image multivue (132a) et un deuxième ensemble de réseaux de diffraction de la pluralité de réseaux de diffraction étant configuré pour diffuser à l'extérieur une autre partie du faisceau lumineux guidé collimaté à l'intérieur d'une deuxième zone de vue (144b) sous la forme de faisceaux lumineux directionnels représentant une deuxième image multivue (132b) ; et
**caractérisé en ce que** la première zone de vue est configurée pour avoir une première plage angulaire et la deuxième zone de vue est configurée pour avoir une deuxième plage angulaire, la première zone de vue et la deuxième de zone de vue étant des plages angulaires mutuellement exclusives.

**2.** Écran multivue statique à multiples zones de vue selon la revendication 1, dans lequel un réseau de diffraction de la pluralité de réseaux de diffraction de l'un ou l'autre des premier et deuxième ensembles de réseaux de diffraction est configuré pour délivrer un faisceau lumineux directionnel ayant une intensité et une direction angulaire principale correspondant à une intensité et une direction de vue d'un pixel de vue de l'une correspondante des première et deuxième images multivues.

**3.** Écran multivue statique à multiples zones de vue selon la revendication 2, dans lequel une caractéristique de réseau du réseau de diffraction est configurée pour déterminer l'intensité et la direction angulaire principale, la caractéristique de réseau configurée pour déterminer la direction angulaire principale comprenant un pas de réseau du réseau de diffraction et/ou une orientation de réseau du réseau de diffraction.

**4.** Écran multivue statique à multiples zones de vue selon la revendication 3, dans lequel la caractéristique de réseau configurée pour déterminer l'intensité comprend une profondeur de réseau du réseau de diffraction.

**5.** Écran multivue statique à multiples zones de vue selon la revendication 1, dans lequel le premier ensemble de réseaux de diffraction et le deuxième ensemble de réseaux de diffraction sont situés sur une surface du guide de lumière à l'opposé d'une surface d'émission du guide de lumière à travers laquelle la partie du faisceau lumineux guidé collimaté est diffusée à l'extérieur sous la forme d'une pluralité de faisceaux lumineux directionnels représentant les première et deuxième images multivues.

**6.** Écran multivue statique à multiples zones de vue selon la revendication 1, comprenant en outre un coupleur de lumière collimateur à l'entrée du guide de lumière, le coupleur de lumière collimateur étant configuré pour coupler optiquement la lumière issue de la source de lumière à l'intérieur de l'entrée du guide de lumière sous la forme du faisceau lumineux guidé collimaté.

**7.** Écran multivue statique à multiples zones de vue selon la revendication 6, dans lequel le coupleur de lumière collimateur comprend un coupleur à réseau cylindrique, la source de lumière étant située au voisinage d'une surface de guidage du guide de lumière et la source de lumière étant configurée pour émettre de la lumière à travers la surface de guidage.

**8.** Écran multivue statique à multiples zones de vue selon la revendication 1, dans lequel la première zone de vue et la deuxième zone de vue sont séparées l'une de l'autre par une zone vierge dans laquelle ni la première image multivue ni la deuxième image multivue ne sont visibles.

**9.** Écran multivue statique à multiples zones de vue selon la revendication 1, dans lequel la première image multivue est différente de la deuxième image multivue.

**10.** Écran multivue statique à multiples zones de vue selon la revendication 1, dans lequel le guide de lumière et les ensembles de réseaux de diffraction sont transparents à la lumière se propageant dans une direction verticale orthogonale à une direction longitudinale correspondant à une direction de propagation du faisceau lumineux guidé.

**11.** Procédé de fonctionnement d'un écran multivue statique à multiples zones de vue (100), le procédé comprenant :

la délivrance d'un faisceau lumineux guidé collimaté à l'intérieur d'un guide de lumière (110) ;
la diffusion à l'extérieur par diffraction d'une partie du faisceau lumineux guidé sous la forme de faisceaux lumineux directionnels dirigés à l'intérieur d'une première zone de vue (144a) au moyen d'un premier ensemble de réseaux de diffraction (128) pour représenter une première image multivue (132a) visible dans la première zone de vue ; et
la diffusion à l'extérieur par diffraction d'une autre partie du faisceau lumineux guidé sous la forme de faisceaux lumineux directionnels dirigés à l'intérieur d'une deuxième zone de vue (144b) au moyen d'un deuxième ensemble de réseaux de diffraction pour représenter une deuxième image multivue (132b) visible dans la deuxième zone de vue,
**caractérisé en ce que** les première et deuxième zones de vue ont des plages angulaires mutuellement exclusives l'une de l'autre.

**12.** Procédé de fonctionnement d'un écran multivue à multiples zones de vue selon la revendication 11, dans lequel la première image multivue et la deuxième image multivue sont différentes l'une de l'autre, la première image multivue étant visible exclusivement dans la première zone de vue et la deuxième image multivue étant visible exclusivement dans la deuxième zone de vue.

**FIG. 1A**

**FIG. 1B**

**FIG. 2**

**FIG. 3A**

**FIG. 3B**

FIG. 3C

**FIG. 4A**

EP 3 899 638 B1

**FIG. 4B**

**FIG. 5A**

**FIG. 5B**

**FIG. 5C**

**FIG. 6A**

**FIG. 6B**

**FIG. 7**

300

| Provide a Collimated Guided Light Beam Within a Light Guide |
| :-- |

310

| Scatter Out a Portion of the Collimated Guided Light Beam into a First View Zone Using a First Set of Diffraction Gratings |
| :-- |

320

| Scatter Out Another Portion of the Collimated Guided Light Beam into a Second View Zone Using a Second Set of Diffraction Gratings |
| :-- |

330

## FIG. 8

**EP 3 899 638 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2017363794 A1
- US 2018196194 A1

- CA 3055529 A1